# EUROPEAN PATENT APPLICATION

(11) **EP 2 808 878 A1**
(43) Date of publication of application: **03.12.2014**
(21) Application number: 14170739.8
(22) Date of filing: 02.06.2014
(51) Int. Cl.: H01F 7/08, H01F 7/16, F16K 31/00

(54) **Stacked solenoid operated linear actuator tube**

(30) Priority: 01.06.2013 US 201361830099 P
(71) Applicant: PARKER HANNIFIN CORPORATION, Cleveland, OH 44124-4141 (US)
(72) Inventor: Guse, William F Jr, Glen Ellyn, IL Illinois 60137 (US)
(74) Representative: Belcher, Simon James

(57) **Abstract**

A tube assembly for a solenoid operated cartridge valve includes an adapter has an axially extending central bore along a longitudinal axis of the tube assembly for receiving an armature. A plug is axially aligned with the central bore of the adapter. A non-magnetic tube having a central bore along the longitudinal axis is aligned with the central bore of the adapter. The tube has a pair of respective annular axially-facing end surfaces abutting the adapter and the plug, the end surfaces being obliquely angled with respect to the longitudinal axis. Filler material is positioned between and joins the adapter and the tube, and the tube and the plug.

## Description

The present invention relates generally to valve actuators, and more particularly to stacked solenoid operated linear actuators.

Many hydraulic valves are wet-type armature solenoids, where system fluid is contained by a tube. The armature moves in the fluid within the tube. The solenoid creates the magnetic force to move the armature so that no external seal is required between the actuator and the spool or poppet it moves. The lack of a seal eliminates any friction and force unbalance due to pressure acting against the area of the seal. Therefore, there is no reduction in the force available from the actuator. US-4194173 discusses these issues.

Early designs used brass tubes held together with tie rods which then evolved to brazed non-ferritic stainless and low carbon steel tubes. Welding the tubes is also known. As the force requirements have increased due to higher pressure requirements, the losses in force due to the need for the flux to jump these gaps drove the need for larger solenoid coils to make up for the loss of force. US-4194173 shows some improvements to eliminate the gaps.

Inlay style tube assemblies were originally developed for proportional valves and then evolved to the on/off solenoid valves. US-5986530 shows a typical inlay style tube. These are made from a solid piece of low carbon steel. A groove is formed in the blank that then gets filled with a bronze material in a welding process or a different type of metal deposition operation. After welding, the excess material is removed to form a tube with a non-magnetic section. This gap is needed to prevent shunting of the flux over the air gap of the armature. This design helped increase the available force by eliminating the air gaps. A bronze material was chosen with a lower melting point to limit the distortion due to the welding operation. The shape of the joint helps focus the flux and enhance force. US-5986530 goes into detail on how the inlay tube is constructed and used.

Brazed style tubes typically used a section of stainless tubing with lap joints on each end. These were limited due to the losses in force as the tube size increased to handle higher pressures. The lap style joints did not provide a benefit to help direct the flux at the air gap.

Inlay style tubes improved control of the force output by making only a small section of the tube non-magnetic. However, the formation of the joint through welding created a potential for porosity that reduces the cycle life of the tube or allows external leakage and the use of the bronze material results in lower tensile properties. Further, stainless materials cannot be welded into the groove because the higher melting temperature would distort the angles of the joint and create variation on the force output.

The present invention provides a tube assembly for a solenoid operated cartridge valve includes an adapter having an axially extending central bore along a longitudinal axis of the tube assembly for receiving an armature; a plug axially aligned with the central bore of the adapter; a nonmagnetic tube having a central bore along the longitudinal axis and aligned with the central bore of the adapter, the tube having a pair of respective annular axially-facing end surfaces abutting the adapter and the plug, the end surfaces being obliquely angled with respect to the longitudinal axis; and filler material positioned between and joining the adapter and the tube, and the tube and the plug.

The assembly of the invention the benefits of the inlay style tube-with flux travelling through the wall of the tube, focus of the flux lines at the air gap, and a smooth transition between sections of the tube-with the processing ease of production of conventional brazing equipment. The stacked and brazed tube also allows for a full stainless steel construction for use on applications where bronze materials are attacked by the hydraulic fluids or external environment.

Optionally, an angled end surface of the adapter abuts one of the end surfaces of the tube and extends from an outer diameter surface to an inner diameter surface that defines the bore of the adapter.

Optionally, the annular end faces are angled at 45° with respect to the longitudinal axis.

Optionally, the annular end faces are angled so as to face radially inward towards the longitudinal axis.

Optionally, the filing material is copper.

Optionally, the adapter is a low carbon steel or a martensitic stainless steel.

Optionally, the plug is a low carbon steel or a martensitic stainless steel.

Optionally, the tube is austenitic stainless steel.

Optionally, joints between the adapter and the tube and between the tube and the plug are stacked joints.

Optionally, the tube assembly includes a second tube axially spaced from the other tube, and the tube assembly is a push/pull tube assembly.

The invention also provides a method of making a tube assembly for a solenoid operated cartridge valve includes forming a pre-brazed assembly by assembling in respective axial order an adapter, a tube, and a plug; brazing the pre-brazed assembly to form a brazed assembly, in which the tube includes a pair of respective annular axially-facing end surfaces abutting the adapter and the plug, the end surfaces being obliquely angled with respect to a longitudinal axis of the tube assembly.

Optionally, the method includes placing filler material on an inner diameter of the tube between the tube and the adapter.

Optionally, the method includes placing filler material on an inner diameter of the tube between the tube and the plug.

Optionally, the filler material is copper.

Optionally, the filler material includes a metal ring.

Optionally, the adapter is a low carbon steel or a martensitic stainless steel.

Optionally, the plug is a low carbon steel or a martensitic stainless steel.

Optionally, the tube is austentitic stainless steel.

Optionally, the assembling includes retaining the assembly with a bolt.

Optionally, the method includes the step of machining away a retaining bolt.

Optionally, the assembling includes retaining the assembly by screwing the plug into the adapter.

Optionally, includes the step of machining the tube from a single piece of non-magnetic material.

Optionally, the step of forming the pre-brazed assembly further includes trapping the brazing elements above respective joints between the plug and the tube and between the tube and the adapter.

Optionally, the method includes machining at least one of the outer diameter or the inner diameter of the brazed assembly.

Optionally, machining include smoothing brazed joints between the plug and the tube and between the tube and the adapter.

The invention also provides a method of making a tube assembly for a solenoid operated cartridge valve includes forming a pre-brazed assembly by assembling in respective axial order an adapter, a tube, and a plug; brazing the pre-brazed assembly to form a brazed assembly; and machining at least one of the outer diameter or the inner diameter of the brazed assembly.

Optionally, forming the pre-brazed assembly further comprises positioning a first filler material between the adapter and the tube and a second filler material between the tube and the plug portion.

Optionally, the first and second filler materials are copper.

Optionally, the first and second filler materials are rings.

Optionally, the adapter is a low carbon steel or a martensitic stainless steel.

Optionally, the plug is a low carbon steel or a martensitic stainless steel.

Optionally, the tube is austenitic stainless steel.

Optionally, the machining includes smoothing brazed joints between the plug and the tube and between the tube and the adapter.

Optionally, the assembling includes retaining the assembly with a bolt.

Optionally, the method includes the step of machining away a retaining bolt.

Optionally, the method includes the step of machining the tube from a single piece of non-magnetic material.

Optionally, the step of forming the pre-brazed assembly further includes trapping the filler materials above respective joints.

The invention is described below by way of example with reference to the accompanying drawings.
FIG. 1 shows a stacked-joint solenoid assembly.
FIG. 2 shows a solenoid tube assembly before brazing and machining steps retained by means of a bolt.
FIG. 3 shows a solenoid tube assembly after brazing and machining steps.
FIG. 4 shows another solenoid tube assembly before brazing and machining steps having a screwed connection.
FIG. 5 shows another solenoid tube assembly having a second tube portion axially spaced from the first.

Solenoid operated valves, cartridge valves in particular, have continued to be rated at increasingly higher pressures where the solenoid tube is exposed to the same high pressure. Current mobile hydraulic valves see pressures to 34.5 MPa (5000 psi) and the trend is for higher pressures. The higher pressures require that the tube be able to contain the high pressure over repeated cycles and be able to communicate a high force to the spool or poppet they actuate. The same high pressures increase the force required from the solenoid due to pressure acting on an area of a poppet or flow forces on a spool.

As mentioned above, tube assemblies as provided by the invention have the benefits of an inlay tube design with the proven technology of brazing dissimilar metals along with a unique method of fixturing.

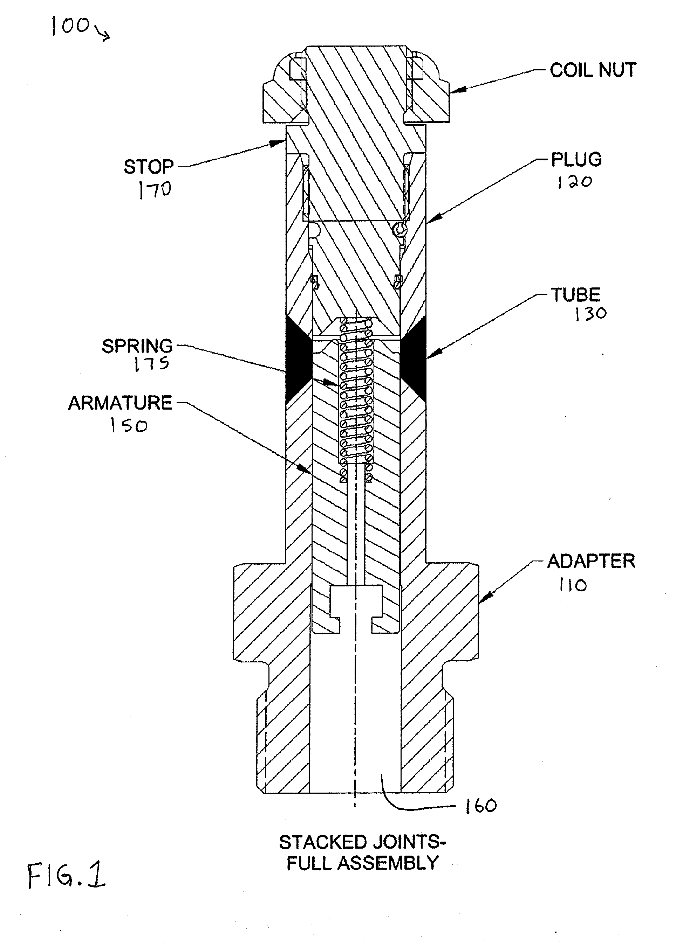

Figure 1 shows a tube assembly 100 which includes an adapter 110, a plug 120, and a tube 130. The basic workings of conventional solenoids are well known.

The adapter 110 may be made from a low carbon steel or a martensitic stainless steel. For example, 400 series steel may be used.

The plug 120 may similarly be made from low carbon steel or martensitic stainless steel. For example, 400 series steel may be used.

The tube 130 may be made of austenitic (non-magnetic) stainless steel or other nonmagnetic material. In some embodiments, for example, 303 or 304 stainless steel may be used.

The armature or plunger 150 within the assembly is also made from low carbon steel or martensitic stainless steel. Low carbon steel is chosen due to its ability to be magnetized when an electromagnet or solenoid coil is energized and releases the magnetism when de-energized. Martensitic stainless steels that behave like low carbon steel are also often used.

The armature 150 is received in a central bore 160 of the assembly, and travels, in the orientation depicted, vertically toward and away from the stop 170, which is shown being screwed into the plug.

Spring 175 biases the armature away from the stop 170, and so the armature moves against this biasing force toward the stop when activated. Other solenoids might be used, including for example push-type solenoids.

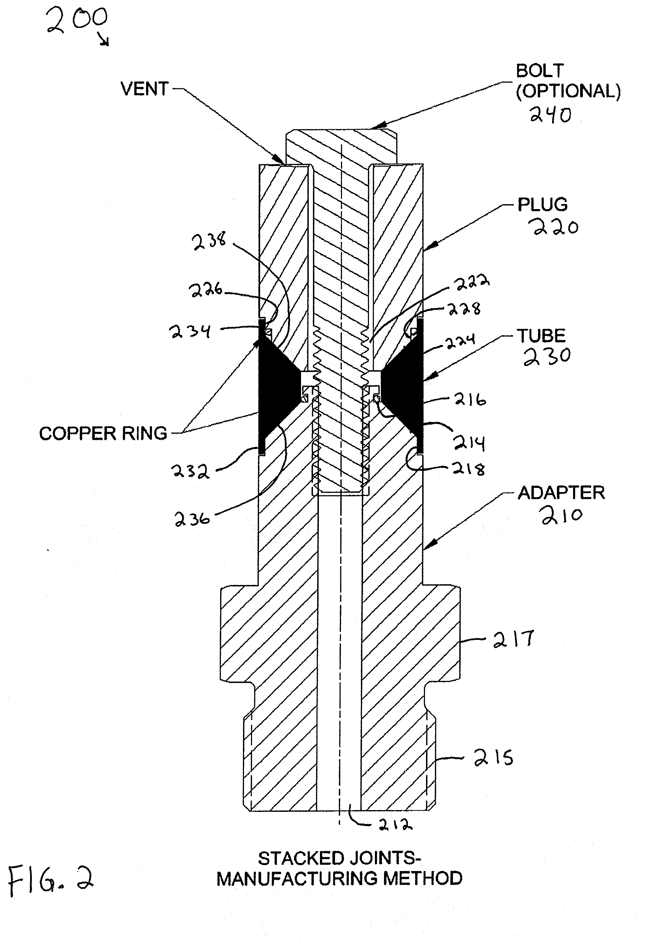

Figure 2 shows a tube assembly 200 before brazing operations and before machining of the assembly. The adapter 210, tube 230, and plug 220 may be stacked together in the same sequence as a conventional brazed tube assembly.

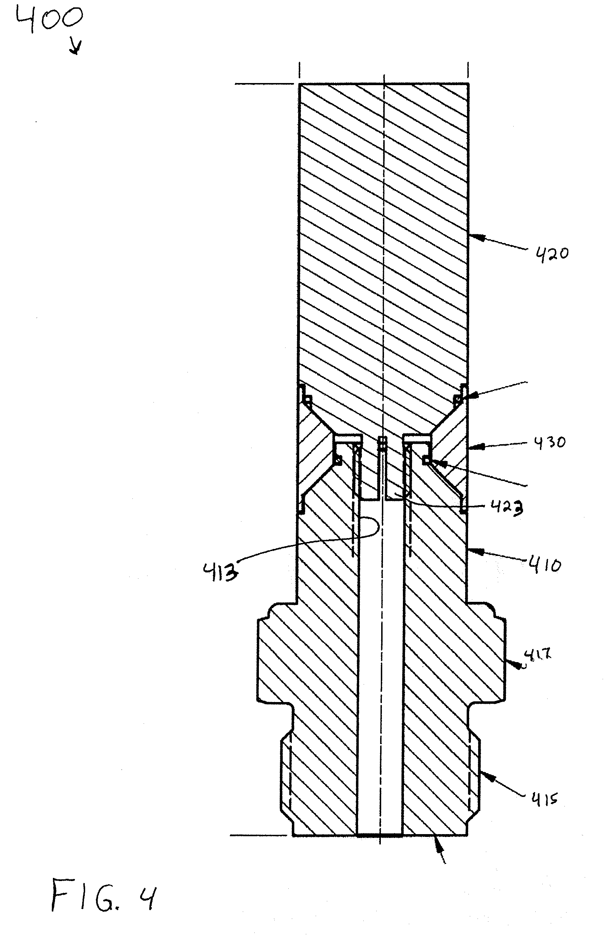

The adapter 210 may include, for example, a central bore 212. Optionally, the bore 212 may include internal treading at the upper end for receiving complimentary threading from either a bolt 240 or a threaded plug (shown in Figure 4).

The adapter includes an obliquely angled annular end surface 214 on its upper side for mating with a corresponding surface of the tube 230. The surface is preferably angled to face radially outward at an angle matching the angle of the end surface of the tube. The adapter may optionally include a radial groove 216 on an outer diameter of a central axially upwardly extending protrusion that opens up to the obliquely angled annular end surface 214. The groove may receive the filler material used for brazing the adapter to the tube. Optionally, the adapter may include an annular relief 218 at the radially outermost edge of the end surface for receiving a complimentary lip 232 of the tube 230. The interfacing of the lip 232 with the relief 218 may assist in easing the orientation and assembly of the parts.

The adapter may also include a threaded end 215 for threadably engaging a valve block or manifold. The adapter may also include a hexagonal (or other shaped) portion 217 for engaging a wrench or other tool to allow the adapter to be spun into the valve block or manifold.

The plug 220 may include a central bore 222 for receiving a bolt 240 for holding the assembly together. The plug 220 includes a bottom annular axially-outward facing end surface 224 for abutting and joining to a complimentary surface of the tube 230. Optionally, the plug 220 may include an annular relief 226 at the radially outermost edge of the end surface (or immediately radially outward of the groove 228) for receiving a complimentary lip 234 of the tube 230. The interfacing of the lip 232 with the relief 218 may assist in easing the orientation and assembly of the parts. The groove 228 may preferably be located at an axially outermost (and therefore radially outermost) location of the annular end surface 224.

The tube 230 includes a pair of respective annular axially-outward facing end surfaces 236 and 238 for mating with corresponding end surfaces of the plug and adapter. Optionally, the tube includes lips 232 and 234 for interfacing with corresponding grooves or reliefs of the adapter and/or plug. As shown, the lips are preferably located at an edge of the annular end surfaces 236 and 238, although other locations are possible. Preferably, the lips are located at radial and axial extremes of the tube. These lips may help align the pieces for assembly and/or keep filler material within the joint. Although no lip is necessary, and one lip is possible, preferably the tube includes two lips and is symmetrical about a horizontal axis in the configuration shown (i.e. is axially symmetrical) so as to make orientation of the tube easier during assembly.

In the devices shown in the drawings, the end surfaces 236, 238 are angled obliquely with respect to the longitudinal axis of the tube assembly. In particular, they are angled so as to be radially-inwardly facing. The angles serve to route the flux through a longer path to direct the flux through the moving armature and not shunt around the inlay area. Preferably, the surfaces are angled from between 30 and 60°, although other angles are possible. More preferably, the angle is approximately 45°.

Optionally, the nonmagnetic material of the tube is machined from a single piece of material (for example, a solid bar) so that issues with weld porosity of the inlay style tubes are eliminated.

Preferably, the tube portion extends just long enough to prevent the flux from shunting over the gap which reduces force output. In other words, the length is selected so as to force the flux through the moving armature and the plug face.

Filler material (for example, a copper ring or a silver ring) is used to braze the tube with the plug and the tube with the adapter. The filler material may be trapped in a location above the joint to be brazed for both braze locations. The location enables the filler material to melt and flow down into the joint when at the brazing temperature. The molten filler material flows into the bevel joint Through capillary action. Although it is possible for the filler material to flow against gravity (and therefore be located below or within the joint, a gravity fed arrangement improves consistency of the joint.

After the parts are assembled, a bolt is used to keep the parts together and maintain their alignment. The bolt could also be replaced by a clamp device (not shown). Alternatively, gravity could be relied upon without a dedicated coupling device.

Figure 4 shows an assembly 400 which is substantially the same as the assembly 200 described above with reference to Figure 2, and consequently the same reference numerals but indexed by 200 are used to denote structures corresponding to similar structures in the assembly. In addition, the foregoing description of the assembly 200 is equally applicable to the assembly 400 except as noted below. Features of the different assemblies can be substituted for one another or used in conjunction with one another where applicable.

Figure 4 shows that one of the plug or adapter (in this case, plug 420) may include a threaded protrusion 423 for threadable engagement with a threaded receptacle 413 in the other one of the plug or adapter (in this case, adapter 410).

After assembly and securement, the tube assembly may either be placed into a brazing furnace or be brazed with an induction coil to melt the filler material and bond the parts.

The bolt (if used) or other securement device may be removed or machined away along with extra material on inner diameter of the tube. Further, the outer diameter may also be machined to remove excess material. In both cases, this machining may be used to smooth the diameters and/or to remove material that was used to trap the filler material and/or align the parts.

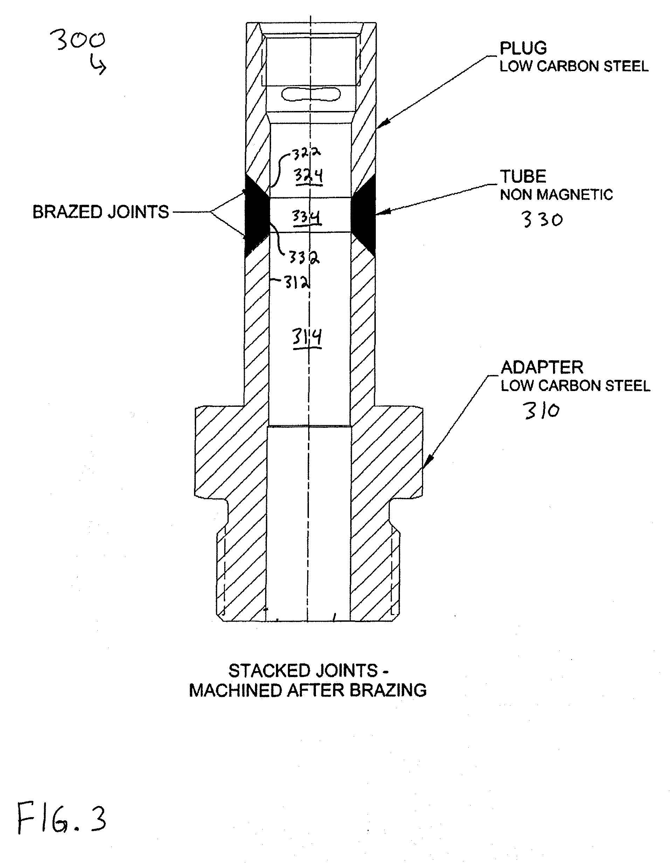

Figure 3 shows how a final assembly 300 appears after machining. By machining away the material, the bore runs true with the dissimilar materials and three sections. In other words, the inner surface 312 of the bore 314 of the adapter 310 is aligned with and continuous with the inner surface 332 of the bore 334 of the tube 330, which is aligned with and continuous with the inner surface 322 of the bore 324 of the plug 320 (although the plug need not have a bore in some devices) at least at the tube and portions of the adapter and plug adjacent the tube. In other words, the bores have been machined into one continuous and smooth bore around the tube.

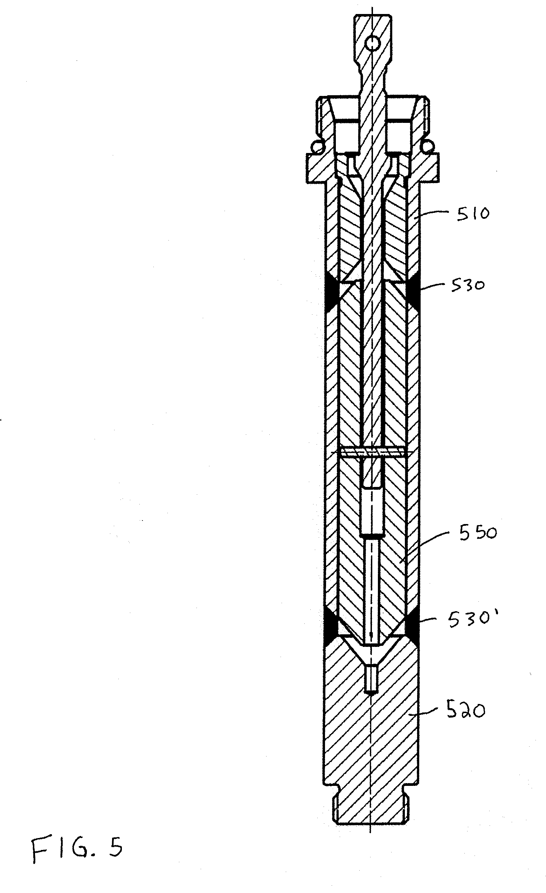

Figure 5 shows an assembly 500 which is substantially the same as the assemblies describe above, and consequently the same reference numerals but indexed to a 500-series number are used to denote structures corresponding to similar structures in the assembly. In addition, the foregoing descriptions of the assemblies 200, 400 are equally applicable to the assembly 500 except as noted below. Features of the different assemblies can be substituted for one another or used in conjunction with one another where applicable.

In particular, Figure 5 depicts a push-pull solenoid type having two axially spaced apart tubes 530, 530'. Because the elimination of the porosity is important, dual-tube or push-pull solenoids are especially advantageous because it has been found that attempting to do tubes with dual inlay sections is a problem for the conventional welded inlay design. The inlay is typically welded one location at a time. When two inlay sections are needed, the heating from the second location causes a problem for the second section. This problem may be mitigated or solved by exemplary methods using brazing.

As used herein, the term "brazing", "braze", and the like are meant to encompass both brazing and soldering. In other words, the invention should not be considered as limited to a narrow definition of brazing such as one in which certain temperatures define the difference between brazing and soldering. Similarly, the filler material may be any appropriate brazing or soldering material and is not limited to copper and silver. Further, the filler material may take any suitable form, and is not limited to a ring. For example, one or more of the following may be used as a filler material: rod, ribbon, powder, paste, cream, wire or preform. Flux may or may not be used as needed, and may be a part of the filler material or may be separately applied. Further, the heating method employed should also not be limited to the methods discussed herein: while furnace or induction heating can be used, other heating methods can also be used. Moreover, the surfaces to be brazed may be cleaned prior to assembly by any method known in the art such, for example, chemical cleaning and/or abrasive/mechanical cleaning.

It is also noted that, although the forms of the tube assembly and its constituent parts have been depicted herein as cylindrical, other configurations can be used such as, for example, square, hexagonal, or other prismatic/extruded shapes. Similarly, the term "tube" should not be considered limited to a tube having a circular cross-section. Tubes having other shapes can be used such as, for example, a square or hexagonal shape.

Alterations and modifications apparent to the skilled reader can be made to the devices shown in the drawings and described herein. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the described devices. In addition, while a particular feature of the invention may have been described above with respect to only one or more of several embodiments, such feature may be combined with one or more other features of the other embodiments, as may be desired and advantageous for any given or particular application.

## Claims

1. A tube assembly for a solenoid operated cartridge valve comprising:
an adapter having an axially extending central bore along a longitudinal axis of the tube assembly for receiving an armature,
a plug axially aligned with the central bore of the adapter,
a nonmagnetic tube having a central bore along the longitudinal axis and aligned with the central bore of the adapter, the tube having a pair of respective annular axially-facing end surfaces abutting the adapter and the plug, the end surfaces being obliquely angled with respect to the longitudinal axis, and
filler material positioned between and joining the adapter and the tube, and the tube and the plug.

2. The tube assembly of claim 1, in which an angled end surface of the adapter abuts one of the end surfaces of the tube and extends from an outer diameter surface to an inner diameter surface that defines the bore of the adapter.

3. The tube assembly of claim 1 or claim 2, in which the annular end faces are angled at 45 with respect to the longitudinal axis.

4. The tube assembly of any one of claims 1 to 3, in which the annular end faces are angled so as to face radially inward towards the longitudinal axis.

5. The tube assembly of any one of claims 1 to 4, in which the filing material is copper.

6. The tube assembly of any one of claims 1 to 5, in which the adapter is a low carbon steel or a martensitic stainless steel, the plug is a low carbon steel or a martensitic stainless steel, and the tube is austenitic stainless steel.

7. The tube assembly of any one of claims 1 to 6, which includes a second tube axially spaced from the other tube, and in which the tube assembly is a push/pull tube assembly.

8. A method of making a tube assembly for a solenoid operated cartridge valve, the method comprising:
forming a pre-brazed assembly by assembling in respective axial order an adapter, a tube, and a plug, and
brazing the pre-brazed assembly to form a brazed assembly,
in which the tube includes a pair of respective annular axially-facing end surfaces abutting the adapter and the plug, the end surfaces being obliquely angled with respect to a longitudinal axis of the tube assembly.

9. The method of claim 8, which includes placing filler material on an inner diameter of the tube between the tube and the adapter.

10. The method of claim 8 or claim 9, which includes placing filler material on an inner diameter of the tube between the tube and the plug.

11. The method of one of claims 8 to 10, in which the filler material is copper.

12. The method of any one of claims 8 to 11, in which the assembling includes retaining the assembly with a bolt, or retaining the assembly by screwing the plug into the adapter.

13. The method of any one of claims 8 to 12, which includes the step of machining away a retaining bolt.

14. The method of any one of claims 8 to 13, in which the step of forming the pre-brazed assembly further includes trapping the brazing elements above respective joints between the plug and the tube and between the tube and the adapter.

15. The method of any one of claims 8 to 14, which includes machining at least one of the outer diameter or the inner diameter of the brazed assembly.
